**Europäisches Patentamt**

**European Patent Office**

**Office européen des brevets**

(19)

(11) Publication number: **0 073 317**
**B1**

(12) # EUROPEAN PATENT SPECIFICATION

(45) Date of publication of patent specification: **17.09.86**

(51) Int. Cl.⁴: **B 62 D 25/08, B 60 S 1/04**

(21) Application number: **82105788.2**

(22) Date of filing: **29.06.82**

(54) **Cowl of a motor vehicle.**

(30) Priority: **25.08.81 JP 125392/81 u**

(43) Date of publication of application:
**09.03.83 Bulletin 83/10**

(45) Publication of the grant of the patent:
**17.09.86 Bulletin 86/38**

(84) Designated Contracting States:
**DE FR GB**

(56) References cited:
**FR-A-2 161 668**
**FR-A-2 445 776**

(73) Proprietor: **TOYOTA JIDOSHA KABUSHIKI KAISHA**
**1, Toyota-cho Toyota-shi**
**Aichi-ken 471 (JP)**

(72) Inventor: **Suzuki, Ichiro**
**c/o TOYOTA JIDOSHA KOGYO K.K. 1, Toyota-cho**
**Toyota-shi Aichi-ken (JP)**
Inventor: **Shimizu, Tadashi**
**c/o TOYOTA JIDOSHA KOGYO K.K. 1, Toyota-cho**
**Toyota-shi Aichi-ken (JP)**
Inventor: **Seo, Kiyokazu**
**c/o TOYOTA JIDOSHA KOGYO K.K. 1, Toyota-cho**
**Toyota-shi Aichi-ken (JP)**

(74) Representative: **Tiedtke, Harro, Dipl.-Ing. et al**
**Patentanwaltsbüro Tiedtke-Bühling-Kinne-Grupe-Pellmann-Grams-Struif Bavariaring 4**
**Postfach 20 24 03**
**D-8000 München 2 (DE)**

## Description

The invention is related to a cowl of a motor vehicle according to the pre-characterizing portion of claim 1.

The FR—A—2 161 662 shows a cowl of a motor vehicle having an outer panel and an inner panel, which are joined to form an air duct.

The outer panel is formed to receive the bearing of the wind shield wiper so that the air duct cross-section is reduced and therefore its air conductivity is deteriorated. This can lead to an impediment in the air conditioning of the passenger section especially in the case of extreme weather.

It is the object of the invention to develop the cowl according to the classification in such manner that it can receive the bearing of the wind shield wiper and, on the other hand, has an air conductivity sufficient for all weather conditions.

This object is achieved by the features in the characterizing portion of the claim 1.

The design according to the invention of the air duct cross-section provides a protected receiving portion for the bearing portion of the wind shield wiper without that the cross-sectional area of the air duct is reduced. Besides, the polar moment of inertia of the air duct cross-section is increased according to the invention and this results in a greater rigidity of the cowl. The third bulge furthermore facilitates the mounting of the cowl on adjacent vehicle members in many motor vehicles.

The FR—A—2 445 776 discloses a cowl having an air duct cross-section which is not constant in its contours in transverse direction of the vehicle but is adapted in each case to the function of the cowl portion formed of the outer and the inner panel.

Further features and advantageous modifications of the invention derive from the subclaims.

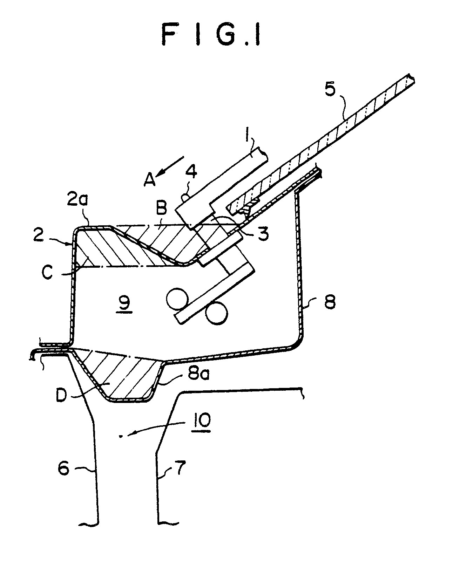

The present invention will be described in detail in conjunction with one embodiment shown in the drawing.

The drawing is a sectional view showing one embodiment of a cowl construction of a motor vehicle according to the present invention. Referring to the drawing, designated at reference numeral 1 is a wind shield wiper arm rotatably mounted through a wiper pivot 4 on a wiper support portion 3 affixed to an outer panel 2, numeral 5 is a wind shield glass, from the outer surface of which deposits are wiped off by a wiper blade, not shown, mounted on the wiper arm 1, numeral 6 is a dash panel, and numeral 7 is an air conditioner or heater. This arrangement is similar to that in the prior art, so that the detailed description thereof will be omitted.

This embodiment features that a portion of a cowl inner panel 8 opposed to a gap 10 formed between the dash panel 6 and the air conditioner 7 protrudes downwardly to form a bulge 8a in such a manner that, when the wind shield glass 5 and the wiper pivot 4 are designed to be positioned forwardly and downwardly (as indicated by an arrow A), an air duct 9 formed by the cowl outer panel 2 and the cowl inner panel 8 is not decreased in cross sectional area. The bulge 8a of the cowl inner panel 8 extends continuously in the lateral direction of the vehicle. A portion of the cowl outer panel 2 opposed to the aforesaid bulge 8a protrudes upwardly to form a bulge 2a extending continuously in the lateral direction of the vehicle. In arranging the cowl outer panel 2 and the cowl inner panel 8 as described above, a hatched portion defining a cross sectional area B adjacent to the bulge 2a and containing the wiper support portion 3 of the concealed type wind shield wiper is provided. Hatched portions with cross sectional areas C and D correspond to an increased value of the air duct 9 in cross sectional area. Accordingly, the cross sectional area of the air duct 9 as a result is represented by $C + D \geqq B$, so that the aforesaid air duct 9 is not decreased in cross sectional area. Therefore, if the wind shield glass 5 and the wiper pivot 4 are positioned forwardly and downwardly, the air conditioning performance and the tortional rigidity of the vehicle body are not deteriorated, and the design choice of the wiper increases.

## Claims

1. A cowl of a motor vehicle connecting a pair of front pillars, having an outer panel (2) and an inner panel (8) disposed under said outer panel (2), said outer and inner panels (2, 8) defining an air duct (9) extending in a lateral direction of the vehicle, said outer panel (2) having a first bulge at the rear top thereof protruding upwardly, supporting a wind shield wiper (1, 3) on a downwardly inclined part thereof, characterized in that said air duct (9) has a substantially constant cross sectional shape, in that the outer panel (2) is provided with a second bulge (2a) protruding upwardly at the front side thereof, and in that a third bulge (8a) is provided at the front side of said inner panel (8), protruding downwardly therefrom.

2. A cowl of a motor vehicle as set forth in claim 1, wherein said second bulge (2a) of said outer panel (2) is opposed to said third bulge (8a) of said panel (8) in a vertical direction.

3. A cowl of a motor vehicle as set forth in claim 1 or 2 wherein said bulge (8a) of said inner panel (8) protrudes downwardly toward a gap (10) formed between a dash panel (6) and an air conditioner (7).

4. A cowl of a motor vehicle as set forth in one of the present claims, wherein a total cross sectional area (C, D) of said second and third bulges (2a, 8a) is larger than a cross sectional area (B) formed between the downwardly inclined rear part of said second bulge (2a), a lower portion of the front part of said first bulge and an imaginary prolongation of the horizontal upper part of said second bulge (2a).

## 0 073 317

### Patentansprüche

1. Schürzenhohlquerbalken eines Kraftfahrzeugs, der ein Paar vorderer Pfosten verbindet, mit einem äußeren Blech (2) und einem inneren Blech (8), das unterhalb des äußeren Bleches (2) angeordnet ist, wobei das äußere und das innere Blech (2, 8) einen Luftkanal (9) bilden, der in Querrichtung des Fahrzeugs verläuft, wobei das äußere Blech (2) an seinem hinteren oberen Ende eine erste Ausbuchtung aufweist, die nach oben hervorragt, und einen Scheibenwischer (1, 3) an einem nach unten geneigten Teil trägt, dadurch gekennzeichnet, daß der Luftkanal (9) eine im wesentlichen konstante Querschnittsform aufweist, daß das äußere Blech (2) an seiner Vorderseite mit einer nach oben hervorragenden zweiten Ausbuchtung (2a) versehen ist und daß an der Vorderseite des inneren Bleches (8) eine dritte Ausbuchtung (8a) vorgesehen ist, die von dieser nach unten hervorragt.

2. Schürzenhohlquerbalken nach Anspruch 1, dadurch gekennzeichnet, daß die zweite Ausbuchtung (2a) des äußeren Bleches (2) der dritten Ausbuchtung (8a) des Bleches (8) in vertikaler Richtung entgegengesetzt angeordnet ist.

3. Schürzenhohlquerbalken nach Anspruch 1 oder 2, dadurch gekennzeichnet, daß die Ausbuchtung (8a) des inneren Bleches (8) nach unten in einen Spalt (10) hervorragt, der zwischen einem Schaltbrett (6) und einer Klimaanlage (7) ausgebildet ist.

4. Schürzenhohlquerbalken nach einem der vorhergehenden Ansprüche, dadurch gekennzeichnet, daß eine Gesamtquerschnittsfläche (C, D) der zweiten und dritten Ausbuchtung (2a, 8a) größer als eine Querschnittsfläche (B) ist, die zwischen dem nach unten geneigten hinteren Teil der zweiten Ausbuchtung (2a), einem unteren Bereich des Vorderteils der ersten Ausbuchtung und einer gedachten Verlängerung des horizontalen oberen Teils der zweiten Ausbuchtung (2a) ausgebildet ist.

### Revendications

1. Un caisson traverse à l'arrière du capot d'un véhicule à moteur reliant deux piliers frontaux, comportant un panneau extérieur (2) et un panneau intérieur (8) disposés en-dessous dudit panneau extérieur (2), lesdits panneaux extérieur et intérieur (2, 8) définissant une canalisation d'air (9) s'étendant dans la direction latérale du véhicule, ledit panneau extérieur (2) présentant un premier bulbe à sa partie supérieure arrière faisant saillie vers le haut, supportant un essuie-glace de pare-brise (1, 3) sur une de ses parties inclinées vers le bas, caractérisé en ce que ladite canalisation d'air (9) présente une forme de section transversale sensiblement constante, en ce que le panneau extérieur (2) est muni d'un second bulbe (2a) faisant saillie vers le haut sur sa face frontale et en ce qu'un troisième bulbe (8a) est prévu à la face frontale dudit panneau intérieur (8) faisant saillie vers le bas à partir de ce panneau.

2. Un caisson traverse à l'arrière du capot d'un véhicule à moteur selon la revendication 1, dans lequel ledit second bulbe (2a) dudit panneau extérieur (2) est opposé audit troisième bulbe (8a) dudit panneau (8) dans la direction verticale.

3. Un caisson traverse à l'arrière du capot d'un véhicule à moteur selon la revendication 1 ou 2, dans lequel ledit bulbe (8a) dudit panneau intérieur (8) fait saillie vers le bas en direction d'un intervalle (10) formé entre un panneau de fermeture (6) et un conditionneur d'air (7).

4. Un caisson traverse à l'arrière du capot d'un véhicule à moteur selon l'une des revendications précédentes, dans lequel une surface de section transversale (C, D) desdits second et troisième bulbes (2a, 8a) est supérieure à la surface de section transversale (B) formée entre la partie arrière inclinée vers le bas dudit second bulbe (2a), une partie inférieure de la partie frontale dudit premier bulbe et un prolongement imaginaire de la partie supérieure horizontale dudit second bulbe (2a).

# F I G . I